# EUROPÄISCHE PATENTSCHRIFT

(11) **EP 2 365 211 B1**
(45) Veröffentlichungstag und Bekanntmachung des Hinweises auf die Patenterteilung: **07.08.2013**
(21) Anmeldenummer: 10002383.7
(22) Anmeldetag: 08.03.2010
(51) Int. Cl.: F03D 1/00, B66C 23/52

(54) **Verfahren zum Ausführen von Arbeiten an einer Windenergieanlage**
Method for carrying out work on a wind farm
Procédé d'exécution de travaux sur une éolienne

(43) Veröffentlichungstag der Anmeldung: 14.09.2011
(73) Patentinhaber: Etanax Holding GmbH, 3031 Pressbaum (AT)
(72) Erfinder: de Buhr, Ingo, 26789 Leer (DE); Glubrecht, Helge Leonhard, 26127 Oldenburg (DE); Hoppmann, Gerrit, 26810 Westoverledingen (DE)
(74) Vertreter: Rothkopf, Ferdinand

(56) Entgegenhaltungen:
- WO-A1-2006/076920
- WO-A1-2010/023743
- DE-A1-102005 025 646
- DE-A1-102007 012 848

## Beschreibung

### Hintergrund der Erfindung

Die Erfindung betrifft ein Verfahren zum Ausführen von Arbeiten an einer Windenergieanlage, die einen in großer Höhe angeordneten Rotorstern mit mindestens einem Rotorblatt aufweist. Insbesondere betrifft die Erfindung ein derartiges Verfahren, bei dem während der Arbeiten der an der Windenergieanlage angebrachte Rotorstern von dieser abgenommen werden muss. So kann es beispielsweise bei einer Windenergieanlage erforderlich sein, dass zu Reparaturzwecken die an der Windenergieanlage sich auf einem Turm befindende Gondel ausgetauscht werden muss.

An Offshore-Windenergieanlagen werden derartige Arbeiten heutzutage von Offshore-Arbeitsplattformen aus durchgeführt. Auf diesen Plattformen befindet sich jeweils ein Kran, der Lasten auch in großer Höhe bewegen kann (vorliegend etwa 50 Meter und auch weit mehr).

Für den Austausch einer Gondel werden zwei Plattformen eingesetzt. Ein Kran auf der ersten Plattform hebt den Rotorstern von der Gondel ab und hält ihn, während der zweite Kran den Austausch der Gondel durchführt. Danach wird der Rotorstern mit Hilfe des ersten Kranes wieder montiert.

Aus DE 10 2007 012 848 A1 sind ein Verfahren zum Transport, Einrichten und Austausch einer Gondel inklusive Rotor einer Offshore-Windenergieanlage und ein Wasserfahrzeug zur Durchführung des Verfahrens bekannt, bei dem unter anderem eine auszutauschende Einheit von dem Turm der Windenergieanlage unter Verwendung eines von dem Wasserfahrzeug mitgeführten Krans abgenommen und die auszutauschende Einheit auf dem Wasserfahrzeug abgelegt wird.

Aus DE 10 2005 025 646 A1 sind ein Verfahren und eine Vorrichtung zur Vornahme von Wartungs-, Reparatur- und Montagearbeiten an einer Gondel einer Windkraftanlage bekannt, bei der ein Wartungsmast vertikal ausgefahren und in der Nähe des oberen Endes der Windkraftanlage verankert wird, bevor ein vom Wartungsmast getragener Kranausleger über die Gondel bewegt wird.

### Zugrundeliegende Aufgabe

Der Erfindung liegt die Aufgabe zugrunde, ein derartiges Verfahren zum Ausführen von Arbeiten an einer Windenergieanlage, bei dem der Rotorstern abgenommen werden muss, kostengünstiger zu gestalten. Zugleich soll eine gleichbleibend hohe Sicherheit für die unter den oft rauen Offshore-Bedingungen durchzuführenden Arbeiten gewährleistet sein.

### ErFindungsgemäße Lösung

Diese Aufgabe ist erfindungsgemäß mit einem Verfahren zum Ausführen von Arbeiten an einer Windenergieanlage gelöst, die einen in großer Höhe angeordneten Rotorstern aufweist, mit den Schritten: Bereitstellen einer Aufnahmevorrichtung, die dazu angepasst ist, den Rotorstern in großer Höhe aufzunehmen, Abheben des Rotorsterns von der Windenergieanlage und Ansetzen an die Aufnahmevorrichtung, Haltern des Rotorsterns an der Aufnahmevorrichtung, Durchführen der Arbeiten an der restlichen Windenergieanlage sowie Abheben des Rotorsterns von der Aufnahmevorrichtung und Ansetzen an die Windenergieanlage.

Mit dem erfindungsgemäßen Verfahren ist insbesondere ein Austausch einer Gondel an einer Offshore-Windenergieanlage mit nur einem Kran möglich. Das erfindungsgemäße Vorgehen senkt damit erheblich die Kosten für den Austausch, denn gemäß der Erfindung muss damit nur eine Offshore-Arbeitsplattform bereitgestellt werden. Kosten für die Bereitstellung eines zusätzlichen Krans entfallen jedoch. Die damit erzielte Kostensenkung ist erheblich.

Erfindungsgemäß wird der Rotorstern insbesondere von der Gondel der zu reparierenden Windenergieanlage abgehoben und an einer Aufnahmevorrichtung in großer Höhe zwischengelagert. Dadurch ist es erfindungsgemäß möglich, dass der Rotorstern weitgehend in der Lage belassen werden kann, in der er sich an der Gondel befunden hat. Insbesondere muss erfindungsgemäß der Rotorstern nicht in eine schräge oder waagrechte Lage geschwenkt werden und muss auch nicht bis zum Fuß der Windenergieanlage hin abgesenkt oder dort abgelegt werden. Der Rotorstern kann vielmehr in einer im Wesentlichen vertikalen Lage belassen werden und muss lediglich an der erfindungsgemäß bereitgestellten Aufnahmevorrichtung zum dortigen Zwischenlagern angesetzt werden. An der Aufnahmevorrichtung ist der Rotorstern im Wesentlichen ortsfest gehalten, wozu der Rotorstern insbesondere in einfacher und zugleich betriebssicherer Weise an der Aufnahmevorrichtung aufgehängt wird.

Die Aufnahmevorrichtung ist besonders vorteilhaft derart gestaltet, dass zumindest jener Teil, an dem der Rotorstem zwischengelagert wird, sich in einer Höhe befindet, die mehr als die Länge eines Rotorblattes des Rotorsterns beträgt. Die Aufnahmevorrichtung ist bevorzugt ein turmartiges Gebilde, das in die Nähe der zu reparierenden Windenergieanlage gebracht worden ist. Alternativ kann die Aufnahmevorrichtung auch eine Vorrichtung sein, die sich an dem Turm der Windenergieanlage selbst unterhalb der Gondel befindet, an diesem dort angekoppelt wird oder ihrerseits an diesem dort ankoppelt. Die erfindungsgemäße Vorgehensweise ist besonders für Offshore-Windenergieanlagen von Vorteil, eignet sich
aber auch für herkömmliche, an Land aufgestellte Windenergieanlagen.

Entsprechend ist bei einer ersten vorteilhaften Weiterbildung des erfindungsgemäßen Verfahrens vorgesehen, dass das Abheben und Ansetzen des Rotorsterns mittels nur eines einzigen Krans erfolgt.

Der Kran ist damit jener, mit dem auch die Arbeiten an der restlichen Windenergieanlage durchgeführt werden. Der Kran kann also wie bereits erwähnt für beide Tätigkeiten verwendet werden. Somit kann das erfindungsgemäße Verfahren insgesamt von nur einer Offshore-Arbeitsplattform aus durchgeführt werden.

Bei einer zweiten vorteilhaften Weiterbildung des erfindungsgemäßen Verfahrens umfasst das Bereitstellen der Aufnahmevorrichtung einen Schritt des Zusammensetzens von Modulen einer modular aufgebauten Aufnahmevorrichtung auf einer Offshore-Arbeitsplattform, wobei insbesondere das Zusammensetzen der Module mit einem Kran erfolgt, mit dem auch die Arbeiten an der restlichen Windenergieanlage durchgeführt werden.

Für diese Weiterbildung ist es wie erwähnt vorgesehen, dass die Aufnahmevorrichtung modular gestaltet ist und insbesondere mehrere Module aufweist, die miteinander verbunden werden können, um eine turmartige Struktur zu erzeugen, die bis in große Höhen reichen kann. Die derartigen Module können dann insbesondere einzeln besser gehandhabt werden. Ferner ist es möglich, die Aufnahmevorrichtung in einfacher Weise an unterschiedliche bereitzustellende Höhen für das Zwischenlagern von Rotorsternen verschieden hoher Windenergieanlagen anzupassen. Es müssen dazu nur mehr oder weniger Module der Aufnahmevorrichtung miteinander gekoppelt werden. Das Koppeln der Module sowie das Zerlegen der Aufnahmevorrichtung kann vorteilhaft von dem auf der erfindungsgemäß besonders bevorzugt verwendeten Offshore-Arbeitsplattform mittels des dort vorgesehenen Krans erfolgen. Ferner können die einzelnen Module der derartigen Aufnahmevorrichtung auf einer solchen Offshore-Arbeitsplattform vorteilhaft gelagert werden.

Bei dem erfindungsgemäßen Verfahren erfolgt das Abheben und Ansetzen des Rotorsterns mittels einer Übergabeeinrichtung, die ein Mittel zum Verbinden mit dem Kran, ein Mittel zum Verbinden mit dem Rotorstern und ein Mittel zum Verbinden mit der Aufnahmevorrichtung umfasst.

Mit der derartigen Übergabeeinrichtung kann der Rotorstern abgehoben und an die Aufnahmevorrichtung umgesetzt sowie dort zwischengelagert werden ohne dass es eines Umschlagens des Rotorsterns bedarf. Es muss lediglich die Übergabeeinrichtung an dem Rotorstern angeschlagen werden und dieser kann dann nach einem Befestigen am Kran von der Windenergieanlage abgehoben werden. Nachfolgend wird der Rotorstern an der Aufnahmevorrichtung mittels der Übergabeeinrichtung angesetzt, insbesondere eingehängt. Die derart angesetzte Übergabeeinrichtung kann dann vom Kran gelöst werden, wobei die Übergabeeinrichtung den Rotorstern weiterhin hält. Zum Rücksetzen des Rotorsterns wird die Übergabeeinrichtung wieder am Kran befestigt und dieser setzt sie zusammen mit dem daran befestigten Rotorstern auf die Windenergieanlage über. Dazu ist an der Übergabeeinrichtung vorteilhaft das Mittel zum Verbinden mit der Aufnahmevorrichtung zwischen dem Mittel zum Verbinden mit dem Rotorstern und dem Mittel zum Verbinden mit dem Kran angeordnet. Insbesondere kann der Rotorstern unten an der Übergabeeinrichtung befestigt werden und diese kann an ihrem oberen Ende am Kran befestigt werden, während sie zum Ansetzen an der Aufnahmevorrichtung in ihrem mittleren Bereich befestigt, insbesondere aufgehängt wird.

Bei einer weiteren vorteilhaften Weiterbildung des erfindungsgemäßen Verfahrens umfasst das Haltern des Rotorsterns einen Schritt des ortsfesten Fixierens eines Rotorblatts des Rotorsterns an dessen Längserstreckung.

Mit dem derartigen Fixieren des Rotorblatts an seiner Längserstreckung ist es möglich den Rotorstern zusätzlich ortsfest zu halten und dadurch in seiner Lage an der Aufnahmevorrichtung zu sichern. Dies ist insbesondere von Vorteil, wenn der Rotorstern an der Offshore-Arbeitsplattform unter widrigen Wetterbedingungen zu Haltern ist.

Mit der erfindungsgemäßen Aufnahmevorrichtung ist es möglich einen Rotorstern in seiner im Wesentlichen vertikalen Lage zwischenzulagern und damit an der zugehörigen Windenergieanlage Reparaturarbeiten durchzuführen, bei denen sich der Rotorstern nicht an der Windenergieanlage befindet. Mit Hilfe der Aufnahmevorrichtung ist es möglich, dass mit besonders wenig Hebewerkzeugen gearbeitet werden kann und der Rotorstern besonders wenig bewegt werden muss.

Die erfindungsgemäße Aufnahmevorrichtung ist mit einem Stützmast gestaltet, der insbesondere aus mehreren Modulen zusammengesetzt ist.

Die modulare Struktur ermöglicht es die Aufnahmevorrichtung einfach aufzubauen und zu zerlegen. Ferner ist es möglich den Stützmast durch einfaches Hinzufügen oder Wegnehmen von Modulen zu verlängern oder zu verkürzen. Der Stützmast ist besonders bevorzugt mittels mindestens eines Seils abgespannt, um ihn in im Wesentlichen vertikaler Lage zu sichern. Eine derartige Anordnung und Sicherung ist insbesondere auf Offshore-Arbeitsplattformen von Vorteil, auf denen Seilwinden als Hilfsmittel zur Verfügung stehen.

Darüber hinaus ist die Aufgabe mit einer Offshore-Arbeitsplattform zum Ausführen von Arbeiten an einer Offshore-Windenergieanlage gelöst, die mit einem Kran zum Abheben und Ansetzen des Rotorsterns und einer Aufnahmevorrichtung der oben erläuterten, erfindungsgemäßen Art ausgestattet ist.

Bei der erfindungsgemäßen Offshore-Arbeitsplattform ist die bereits genannte Übergabeeinrichtung vorgesehen, die ein Mittel zum Verbinden mit dem Kran, ein Mittel zum Verbinden mit dem Rotorstern und ein Mittel zum Verbinden mit der Aufnahmevorrichtung umfasst.

Eine vorteilhafte Weiterbildung der erfindungsgemäßen Offshore-Arbeitsplattform sieht schließlich vor, dass eine Fixiereinrichtung zum ortsfesten Fixieren eines Rotorblatts des Rotorsterns an der Offshore-Arbeitsplattform vorgesehen ist.

### Kurzbeschreibung der Zeichnungen

Nachfolgend wird ein Ausführungsbeispiel der erfindungsgemäßen Lösung anhand der beigefügten schematischen Zeichnungen näher erläutert. Es zeigt:
Fig. 1 eine perspektivische Ansicht eines Ausführungsbeispiels einer erfindungsgemäßen Offshore-Arbeitsplattform neben einer Offshore-Windenergieanlage,

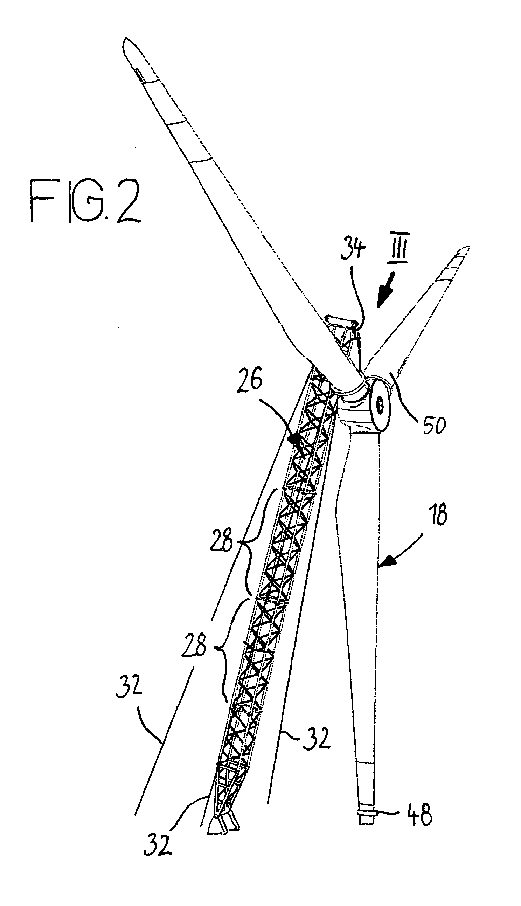

Fig. 2 das Detail II in Fig. 1 in vergrößertem Maßstab und
Fig. 3 das Detail III in Fig. 2 in vergrößertem Maßstab.

### Detaillierte Beschreibung des Ausführungsbeispiels

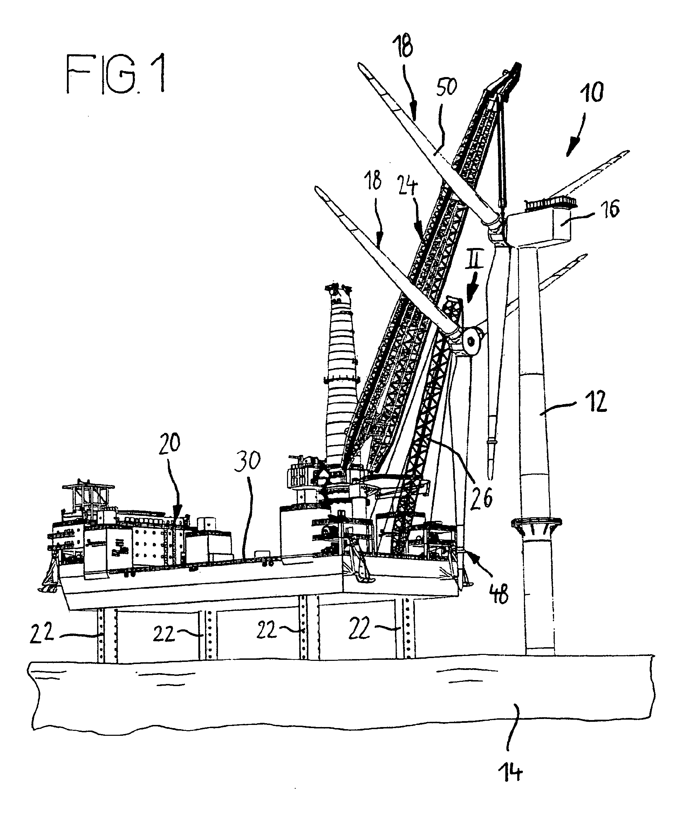

In Fig. 1 ist eine Offshore-Windenergieanlage 10 dargestellt, die mit einem Turm 12 im Meer bzw. Wasser 14, also offshore, aufgestellt ist. Auf dem Turm 12 befindet sich eine Gondel 16, an der ein Rotorstern 18 drehbar gelagert ist. An die Offshore-Windenergieanlage 10 ist eine Offshore-Arbeitsplattform 20 herangefahren und hat sich mittels Füßen 22 aus dem Wasser 14 gehoben. Auf der Offshore-Arbeitsplattform 20 befindet sich ein Kran 24 sowie eine Aufnahmevorrichtung 26.

Die Offshore-Arbeitsplattform 20 dient zum Ausführen von Arbeiten an der Offshore-Windenergieanlage 10. Für diese Arbeiten kann der Kran 24 bis über die Gondel 16 reichen und mit ihm kann insbesondere die Gondel 16 auch insgesamt von dem Turm 12 abgenommen und ausgetauscht werden. Bevor dies möglich ist, muss jedoch zunächst der Rotorstern 18 von der Gondel 16 abgenommen werden. Dieses Abnehmen des Rotorsterns 18 wurde bisher von einem zweiten Kran auf einer zweiten Offshore-Arbeitsplattform durchgeführt. Bei der dargestellten Vorgehensweise wird der Rotorstern 18 hingegen mittels des Krans 24 abgenommen und dann an der Aufnahmevorrichtung 26 zwischengelagert, während der Kran 24 wieder für den Austausch der Gondel 16 verwendet werden kann. In Fig. 1 sind dabei anstatt des einen umgesetzten Rotorsterns 18 zwei Rotorsterne veranschaulicht, die die beiden Endlagen - einmal montiert und einmal zwischengelagert - des Rotorsterns 18 veranschaulichen sollen.

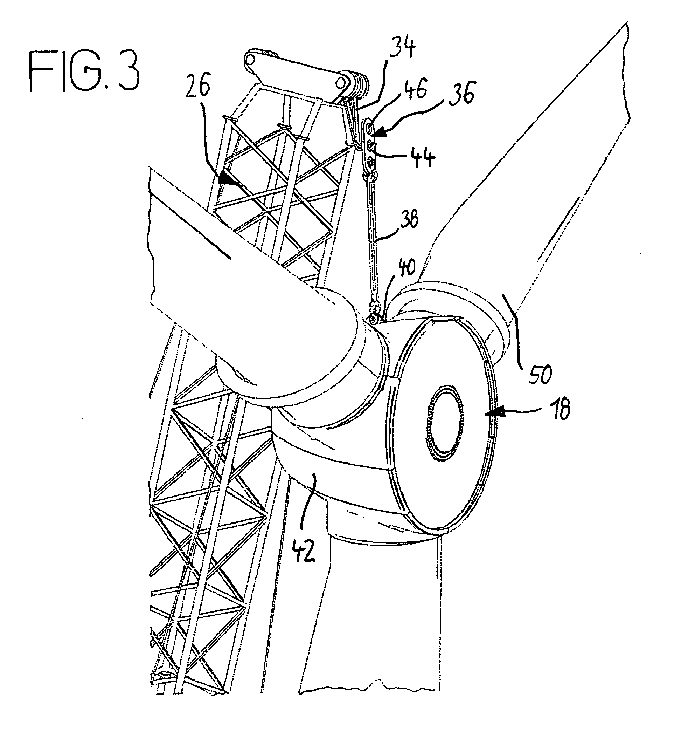

Die Aufnahmevorrichtung 26 ist dabei turmartig mittels mehrerer Module 28 in Gestalt von Gitterturmabschnitten gestaltet, die während der Anfahrt der Offshore-Arbeitsplattform 20 auf deren Deck 30 zwischengelagert waren und vor der Offshore-Windenergieanlage 10 mittels des Krans 24 in der erforderlichen Höhe zusammengesetzt wurden. Der derart hergestellte Turm der Aufnahmevorrichtung 26 ist an seinem Fußende schwenkbar gelagert und mittels einer (nicht dargestellten) Leiter besteigbar. Um die Aufnahmevorrichtung 26 im Wesentlichen in vertikaler Lage an der Offshore-Arbeitsplattform 20 zu halten, ist diese mit Seilen 32 abgespannt. Am Kopf der Aufnahmevorrichtung 26 ist ein Haken 34 vorgesehen. In diesen Haken 34 kann, wie in Fig. 3 dargestellt eine Übergabeeinrichtung 36 eingehängt werden.

Diese Übergabeeinrichtung 36 weist ein Mittel 38 in Form einer Seilverbindung auf, mit dem es an einer Öse 40 an dem Rotorstern 18 und insbesondere an dessen Rotornabe 42 angekoppelt worden ist. Über dem Mittel 38 befindet sich ein Mittel 44 zum Verbinden der Übergabeeinrichtung 36 mit dem Haken 34 in Form einer ersten Öse in einer Platte. Über diesem Mittel 44 befindet sich schließlich als weiteres Mittel 46 zum Verbinden der Übergabeeinrichtung 36 mit dem Kran 24 in der Platte eine weitere Öse. In diese obere Öse der Übergabeeinrichtung 36 kann ein nicht im Detail dargestellter Kranhaken eingehakt werden, wodurch es möglich ist, die Übergabeeinrichtung 36 samt dem daran angeschlagenen Rotorstern 18 an die Aufnahmevorrichtung 26 zu hängen und von dieser wieder abzunehmen, ohne, dass die Verbindung zwischen der Übergabeeinrichtung 36 und dem Rotorstern 18 gelöst werden müsste.

Zum im Wesentlichen ortsfesten Haltern des Rotorsterns 18 in der in den Fig. dargestellten Lage ist an der Offshore-Arbeitsplattform 20 ferner eine Fixiereinrichtung 48 angeordnet. Diese Fixiereinrichtung 48 befindet sich etwa auf der Höhe des Decks 30 der Offshore-Arbeitsplattform 30 und umgreift dort eines der insgesamt drei Rotorblätter 50 des Rotorsterns 18.

Die Aufnahmevorrichtung 26 ist auf diese Weise dazu einrichtet, den Rotorstern 18 in im Wesentlichen vertikaler Lage neben der Offshore-Windenergieanlage 10 in großer Höhe aufzunehmen und dort zwischenzulagern. An der Offshore-Windenergieanlage 10 können während dieser Zwischenlagerung Reparaturarbeiten durchgeführt und es kann insbesondere die gesamte Gondel 16 ausgetauscht werden. Dieser Austausch kann mit dem einen, auf der Offshore-Arbeitsplattform 20 vorhandenen Kran 24 ausgeführt werden.

Nach Erledigung der Reparaturarbeiten kann der Rotorstern 18 von der Aufnahmevorrichtung 26 mit Hilfe des Krans 24 und insbesondere auch mit Hilfe der Übergabeeinrichtung 36 in einfacher Weise wieder an die restliche Offshore-Windenergieanlage 10 angesetzt werden.

Mit dem derartigen Vorgehen können die Kosten für einen Gondeltausch erheblich gesenkt werden, weil insbesondere nur eine statt zwei Offshore-Arbeitsplattformen bereitgestellt werden muss.

Abschließend sei angemerkt, dass sämtlichen Merkmalen, die in den Anmeldungsunterlagen und insbesondere in den abhängigen Ansprüchen genannt sind, trotz dem vorgenommenen formalen Rückbezug auf einen oder mehrere bestimmte Ansprüche, auch einzeln oder in beliebiger Kombination eigenständiger Schutz zukommen soll.

### Bezugszeichenliste

- 10: Offshore-Windenergieanlage
- 12: Turm
- 14: Wasser
- 16: Gondel
- 18: Rotorstern
- 20: Offshore-Arbeitsplattform
- 22: Fuß
- 24: Kran
- 26: Aufnahmevorrichtung
- 28: Modul
- 30: Deck
- 32: Seil
- 34: Haken
- 36: Übergabeeinrichtung
- 38: Mittel (Zugverbindung)
- 40: Öse
- 42: Rotornabe
- 44: Mittel (untere Öse)
- 46: Mittel (obere Öse)
- 48: Fixiereinrichtung
- 50: Rotorblatt

## Patentansprüche

1. Verfahren zum Ausführen von Arbeiten an einer Windenergieanlage (10), die einen in großer Höhe angeordneten Rotorstern (18) aufweist, mit den Schritten:
Bereitstellen einer Aufnahmevorrichtung (26), die dazu angepasst ist, den Rotorstern (18) mit einem Stützmast in großer Höhe aufzunehmen,
Abheben des Rotorsterns (18) von der Windenergieanlage (10) und Ansetzen an die Aufnahmevorrichtung (26),
Haltern des Rotorsterns (18) an der Aufnahmevorrichtung (26),
Durchführen der Arbeiten an der restlichen Windenergieanlage (10) sowie Abheben des Rotorsterns (18) von der Aufnahmevorrichtung (26) und Ansetzen an die restliche Windenergieanlage (10),
**dadurch gekennzeichnet, dass** das Abheben und Ansetzen des Rotorsterns (18) mittels einer Übergabeeinrichtung (36) erfolgt, die ein Mittel (46) zum Verbinden mit dem Kran (24), ein Mittel (38) zum Verbinden mit dem Rotorstern (18) und ein Mittel (44) zum Verbinden mit der Aufnahmevorrichtung (26) umfasst.

2. Verfahren nach Anspruch 1,
**dadurch gekennzeichnet, dass** das Abheben und Ansetzen des Rotorsterns (18) mittels eines Krans (24) erfolgt, mit dem auch die Arbeiten an der restlichen Windenergieanlage (10) durchgeführt werden.

3. Verfahren nach Anspruch 1 oder 2,
**dadurch gekennzeichnet, dass** das Bereitstellen der Aufnahmevorrichtung (26) einen Schritt des Zusammensetzens von Modulen (28) der Aufnahmevorrichtung (26) auf einer Offshore-Arbeitsplattform (20) umfasst, wobei insbesondere das Zusammensetzen der Module (28) mit einem Kran (24) erfolgt, mit dem auch die Arbeiten an der restlichen Windenergieanlage (10) durchgeführt werden.

4. Verfahren nach einem der Ansprüche 1 bis 3,
**dadurch gekennzeichnet, dass** das Haltern des Rotorsterns (18) einen Schritt des ortsfesten Fixierens (48) eines Rotorblatts (50) des Rotorsterns (18) an dessen Längserstreckung umfasst.

5. Offshore-Arbeitsplattform (20) zum Ausführen von Arbeiten an einer Offshore-Windenergieanlage (10) nach Anspruch 1 mit einem darauf angebrachten Kran (24) zum Abheben und Ansetzen des Rotorsterns (18) der Windenergieanlage (10) und einer darauf angebrachten Aufnahmevorrichtung (26), wobei
die Offshore-Arbeitsplattform (20) dazu angepasst ist, den Rotorstern (18) mit einem Stützmast in großer Höhe aufzunehmen und dort zu haltem, **dadurch gekennzeichnet, dass** eine Übergabeeinrichtung (36) vorgesehen ist, die ein Mittel (46) zum Verbinden mit dem Kran (24), ein Mittel (38) zum Verbinden mit dem Rotorstern (18) und ein Mittel (44) zum Verbinden mit der Aufnahmevorrichtung (26) umfasst.

6. Offshore-Arbeitsplattform nach Anspruch 5,
**dadurch gekennzeichnet, dass** eine Fixiereinrichtung (48) zum ortsfesten Fixieren eines Rotorblatts (50) des Rotorsterns (18) an der Offshore-Arbeitsplattform (20) während des Haltems an der Aufnahmevorrichtung (26) vorgesehen ist.

## Claims

1. A process for carrying out work on a wind turbine (10) which has a rotor star (18) arranged at high altitude, having the steps:
providing a receiving device (26) which is adapted to receive the rotor star (18) at high altitude by means of a support mast,
removing the rotor star (18) from the wind turbine (10) and positioning it on the receiving device (26),
mounting the rotor star (18) on the receiving device (26),
carrying out the work on the remaining wind turbine (10) and removing the rotor star (18) from the receiving device (26) and positioning it on the remaining wind turbine (10), **characterised in that** the removal and positioning of the rotor star (18) takes place by means of a transfer device (36) which comprises a means (46) for connection to the crane (24), a means (38) for connection to the rotor star (18) and a means (44) for connection to the receiving device (26).

2. A process according to Claim 1,
**characterised in that** the removal and positioning of the rotor star (18) takes place by means of a crane (24) with which the work on the remaining wind turbine (10) is also carried out.

3. A process according to Claim 1 or 2,
**characterised in that** the provision of the receiving device (26) comprises a step of assembling modules (28) of the receiving device (26) on an offshore work platform, wherein in particular the assembly of the modules (28) takes place using a crane (24) with which the work on the remaining wind turbine (10) is also carried out.

4. A process according to one of Claims 1 to 3,
**characterised in that** the mounting of the rotor star (18) comprises a step of securing (48) a rotor blade (50) of the rotor star (18) in fixed manner along its longitudinal extent.

5. An offshore work platform (20) for carrying out work on an offshore wind turbine (10) according to Claim 1 with a crane (24) mounted thereon for removing and positioning the rotor star (18) of the wind turbine (10) and a receiving device (26) mounted thereon, wherein the offshore work platform (20) is adapted to receive the rotor star (18) at high altitude by means of a support mast and to mount it there, **characterised in that** a transfer device (36) is provided which comprises a means (46) for connection to the crane (24), a means (38) for connection to the rotor star (18) and a means (44) for connection to the receiving device (26).

6. An offshore work platform according to Claim 5,
**characterised in that** a securing device (48) is provided for securing a rotor blade (50) of the rotor star (18) in fixed manner on the offshore work platform (20) whilst it is mounted on the receiving device (26).

## Revendications

1. Procédé d'exécution de travaux sur une éolienne (10) comportant une étoile de rotor (18) disposée à grande hauteur, avec les étapes suivantes :
préparation d'un dispositif réceptacle (26) conçu pour recevoir l'étoile de rotor (18) à grande hauteur avec un mât de soutien ;
soulèvement de l'étoile de rotor (18) par rapport à l'éolienne (10) et mise en place au niveau du dispositif réceptacle (26) ;
maintien de la tige de rotor (18) au niveau du dispositif réceptacle (26) ;
exécution des travaux sur le reste de l'éolienne (10) ainsi que soulèvement de l'étoile de rotor (18) par rapport au dispositif réceptacle (26) et mise en place sur le reste de l'éolienne (10) ;
**caractérisé en ce que** le soulèvement et la mise en place de la tige de rotor (18) sont réalisés à l'aide d'un dispositif de transfert (36) comprenant un moyen (46) de jonction avec la grue (24), un moyen (38) de jonction avec l'étoile de rotor (18) et un moyen (44) de jonction avec le dispositif réceptacle (26).

2. Procédé selon la revendication 1,
**caractérisé en ce que** le soulèvement et la mise en place de l'étoile de rotor (18) sont réalisés à l'aide d'une grue (24) servant également à réaliser les travaux sur le reste de l'éolienne (10).

3. Procédé selon la revendication 1 ou 2,
**caractérisé en ce que** la préparation du dispositif réceptacle (26) comprend une étape d'assemblage des modules (28) du dispositif réceptacle (26) sur une plate-forme de travail en haute mer (20), l'assemblage des modules (28) étant notamment réalisé à l'aide d'une grue (24) servant également à réaliser les travaux sur le reste de l'éolienne (10).

4. Procédé selon l'une quelconque des revendications 1 à 3,
**caractérisé en ce que** le maintien de l'étoile de rotor (18) comprend l'étape de fixation (48) fixe sur place d'une pale de rotor (50) de la tige de rotor (18) au niveau de son prolongement longitudinal.

5. Plate-forme de travail en haute mer (20) servant à l'exécution de travaux sur une éolienne en haute mer (10) selon la revendication 1, avec une grue (24) disposée dessus servant au soulèvement et à la mise en place de la tige de rotor (18) de l'éolienne (10) et d'un dispositif réceptacle (26) disposé dessus, la plate-forme de travail en haute mer (20) étant conçue pour recevoir l'étoile de rotor (18) pourvue d'un mât de soutien à grande hauteur et pour les maintenir à cet endroit, **caractérisée en ce qu'**un dispositif de transfert (36) est prévu comprenant un moyen (46) de jonction avec la grue (24), un moyen (38) de jonction avec l'étoile de rotor (18) et un moyen (44) de jonction avec le dispositif réceptacle (26).

6. Plate-forme de travail en haute mer selon la revendication 5,
**caractérisée en ce qu'**un dispositif de fixation (48) servant à fixer fixement sur place une pale de rotor (50) de la tige de rotor (18) est prévu au niveau de la plate-forme de travail en haute mer (20) pendant le maintien dans le dispositif réceptacle (26).
